# EUROPÄISCHE PATENTANMELDUNG

(11) **EP 1 052 228 A1**
(43) Veröffentlichungstag der Anmeldung: **15.11.2000**
(21) Anmeldenummer: 99109592.8
(22) Anmeldetag: 14.05.1999
(51) Int. Cl.: C02F 3/12

(54) **Verfahren zur Reinigung von Abwasser und Einrichtung zur Durchführung des Verfahrens**

(71) Anmelder: INGERLE, Kurt, A-6020 Innsbruck (AT)
(72) Erfinder: INGERLE, Kurt, A-6020 Innsbruck (AT)
(74) Vertreter: Hofinger, Engelbert, Dr.Dr.

(57) **Zusammenfassung**

Verfahren zur Reinigung von kommunalem oder ähnlichem Abwasser nach der Einbeckentechnologie, in der während eines Zyklus die Phasen Belüften (B-Phase), Vorabsetzen (V-Phase) und Abziehen von Klarwasser (A-Phase) ablaufen, wobei der biologische Reaktor (1) mit einem oder mehreren vorgeschalteten Absetz- bzw. Schlammspeicherbecken (2) zu hydraulisch kommunizierenden Gefäßen verbunden ist, der Zufluß zur Gesamtanlage kontinuierlich erfolgt, und in der Abzugsphase der Zufluß (3) zum biologischen Reaktor unterbunden wird.

## Beschreibung

Die Erfindung betrifft ein Verfahren und Einrichtungen zur Reinigung von kommunalem oder ähnlichem Abwasser nach der Einbeckentechnologie.

Das bekannteste Verfahren der Einbeckentechnologie ist - vorwiegend für kleine Kläranlagen - die SBR Technik (sequency batch reactor = stoßweise Beschickung). Am Beginn eines Zyklus wird aus einem Speicherbecken mit einer Pumpe Abwasser in den biologischen Reaktor gepumpt und anschließend der Belüftungs-(B), Vorabsetz- (V) und Abzugsphase (A) unterworfen. Dann beginnt wieder der Belüftungsvorgang. Nachteilig wirkt sich aus, daß Pumpspeicherbecken vorzuschalten sind, die weder einer Entschlammung noch einer Speicherung des Schlammes dienen.

Erfindungsgemäß werden vorgeschaltete Becken zur Entschlammung des Rohabwassers, die gleichzeitig der Schlammspeicherung dienen, hydraulisch mit dem biologischen Reaktor verbunden, sodaß alle Becken wie kommunizierende Gefäße wirken. Es ist sinnvoll, mindestens zwei solche vorgeschaltete Becken anzuordnen, sodaß im ersten der Primärschlamm (PS) und im zweiten der Überschußschlamm (ÜS) gespeichert werden kann. Der Primärschlamm wird zu einer großen Kläranlage zur weiteren Behandlung gebracht und der Überschußschlamm kann eventuell vor Ort landwirtschaftlich verwendet werden. Mechanische Reinigungseinrichtungen wie Rechen oder Siebe sind nicht erforderlich. Diese Anordnung der Becken hat den Vorteil, daß das in der B- und V-Phase zufließende Abwasser den Wasserspiegel in allen Becken anhebt und somit der Aufstau klein gehalten werden kann.

Der Spiegelanstieg erfolgt bis zum Ende der V-Phase in allen Becken. Das in der V-Phase in den Reaktor gelangende entschlammte Rohabwasser ist mengenmäßig gering, wird in den Bodenbereich des Reaktors geführt, dort im Schlammbereich gehalten und gelangt deshalb in der anschließenden A-Phase nicht in den Ablauf. Die V-Phase wird so lange gewählt, bis ein feststofffreier Abzug von Klarwasser möglich ist.

Am Beginn der A-Phase wird der Zufluß zum biologischen Reaktor unterbunden, sodaß jetzt das zufließende Abwasser nur in den Vorbecken aufgefangen wird und dort den Wasserspiegel weiter anhebt. Im biologischen Reaktor wird Klarwasser abgezogen, bis ein vorgegebener minimaler Wasserspiegel erreicht ist. Der Klarwasserabzug erfolgt vorzugsweise mit Hilfe eines Drucklufhebers. Gleichzeitig kann mit der gleichen Druckluft, die den Klarwasserabzug antreibt, der Zulauf zum biologischen Reaktor z. B. durch eine Gummikugel oder einen Gummischlauch unterbunden werden.

Um den biologischen Reaktor optimal für die Reinigung des Abwassers nutzen zu können, wird die Belüftungsphase vom Abwasserzulauf in den Reaktor abhängig gemacht. Die Belüftungsphase wird solange betrieben, bis ein vorgegebener Wasserspiegel im Reaktor erreicht wird. Dann beginnt die V-Phase. Für das Abschalten der Belüftung - vorzugsweise wählt man eine feinblasige Druckbelüftung - wird z.B. ein Schwimmerschalter eingesetzt. Zusätzlich wird man die B-Phase zeitlich noch einschränken (z.B. mit 6 Stunden). Für die Elimination von organischen Stoffen des Abwassers und für die Nitrifikation ist das aerobe Schlammalter maßgebend. Der Nachweis der hydraulischen Kapazität erfolgt mit der maximalen Abwassermenge. Für die biochemische Reinigung ist das aerobe Schlammalter der mittleren Wochenbelastung maßgebend.

Weitere Einzelheiten der Erfindung werden anschließend anhand der Zeichnungen erläutert. In diesen sind Fig. 1 bis Fig. 5 Vertikalschnitte in Fließrichtung durch die Becken. Fig. 1 zeigt die B-Phase, Fig. 2 die V-Phase, Fig. 3 die Überschußschlammabzugsphase (ÜS), Fig. 4 die Klarwasserabzugsphase (KW) und Fig. 5 die Schwimmschlammabzugsphase (SS). Fig. 6 bis Fig. 10 zeigen weitere konstruktive Ausführungen des KW-, des ÜS- und des SS-Abzuges, sowie des Verschlusses der Zulaufleitung zum biologischen Reaktor während der A-Phase. Fig. 11 zeigt den Reaktorinhalt im zeitlichen Verlauf.

Die dargestellte Einrichtung besteht aus einem nach der Einbeckentechnologie arbeitenden biologischen Reaktor (1), dem ein oder mehrere Becken (2) vorgeschaltet sind, und wobei während des Abzuges von Klarwasser der Zufluß (3) zum biologischen Reaktor unterbunden wird. Die Belüftungsphase wird während eines Tages optimal dem Abwasserzufluß zur Kläranlage angepaßt. Der automatische Überschuß- und Schwimmschlammabzug dient auch dem Konzentrationsausgleich während eines Tages und hilft, längere Belastungsphase der Kläranlage besser zu überbrücken.

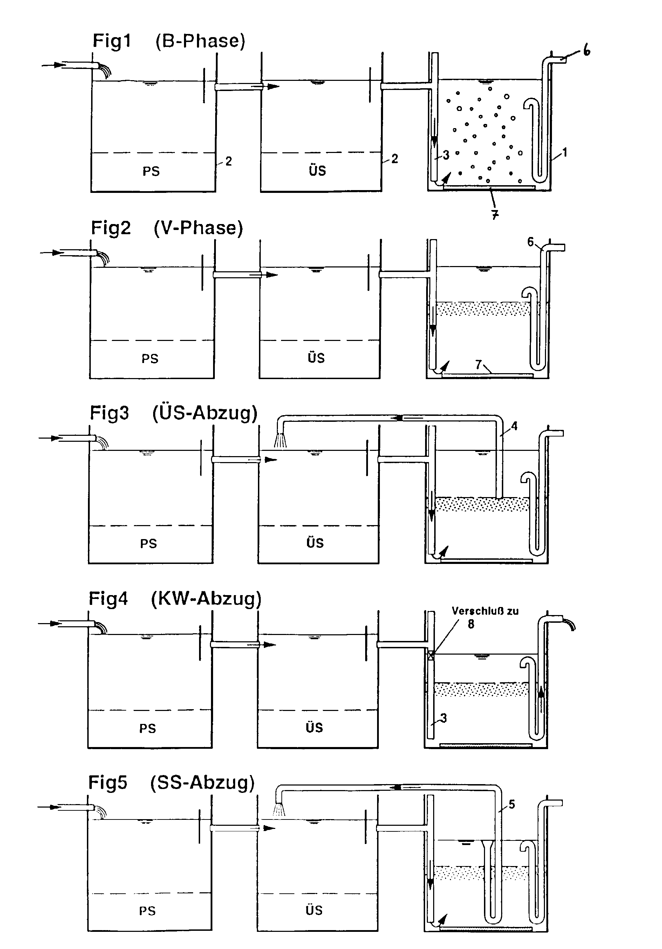

Der ÜS-Abzug erfolgt automatisch in jedem Zyklus. Am Ende der V-Phase wird kurzzeitig in einer fix vorgegebenen Reaktorstelle (ca. 1,2 m unter dem Wasserspiegel) kurzzeitig Inhalt des Reaktors abgezogen und in die vorgeschalteten Becken gepumpt (ca. 1 bis 2 Minuten). Liegt der Schlammspiegel zur Abpumpzeit über der Abzugsstelle, wird Schlamm erfaßt, liegt er tiefer, wird Klarwasser im Kreislauf geführt (siehe Fig. 3). Der ÜS-Abzug erfolgt sinnvoller Weise auch mit Druckluft.

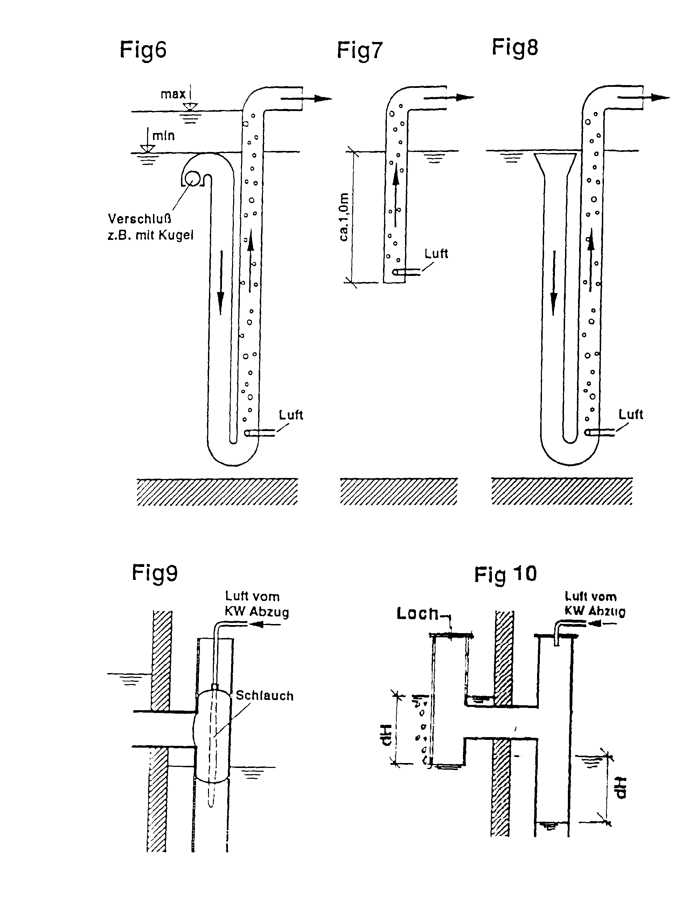

Der SS-Abzug wird 1 bis 2 Minuten am Ende der A-Phase vorgenommen, wenn der minimale Wasserspiegel erreicht ist. (siehe Fig. 5 und 7).

Der ÜS-Abzug und der SS-Abzug haben auch die wichtige Aufgabe, eine Kreislauf- führung des Abwassers hervorzurufen und somit einen Konzentrationsausgleich zwischen Tag und Nacht zu erzielen. Auch längere Belastungsunterbrechungen einer Kläranlage können so gemildert werden, da in der Vorklärung rückgelöste Stoffe das Leben der Biologie erhalten helfen.

Eventuell kann bei besonderen Verhältnissen der Zufluß zum Reaktor schon am Beginn der V-Phase unterbrochen werden.

Im Vorklärbecken und im Schlammspeicher kann geruchsbelastete Luft auftreten. Durch Einblasen dieser Luft in den biologischen Reaktor im Zuge der Belüftung kann dieses Problem gemildert bzw. beseitigt werden.

### Beispiel:

### Annahmen:

Kommunales Abwasser: Trennsystem, 150 EW, 60 g BSB5/EW.

Q_{d} = 22,5 m³/d; Qₘₐₓ = 2,25 m3/d; Qₘ = 22,5 : 24 = 0,94 m³/h
Sₒ = 9,0 kg BSB₅/d; Zufluß in den biologischen Reaktor 6,0 kg BSB₅/d

Schlamm: ISV = 150 ml/g; TS = 3,3 g/l; Vₛ = 1,25 m/h
Fläche der vorgeschalteten Becken: 10 m²
Fläche des biologischen Reaktors: 10 m²
Mind. Wassertiefe: 3,0 m

B-Phase: tₘᵢₙ = 1,0 h; t ₘₐₓ = 6 h; tₘ = 2,25 : 0,94 = 2,4 h

V-Phase: 1 h; mittlere Abzugsmenge 11 m³/h (Heberleistung)

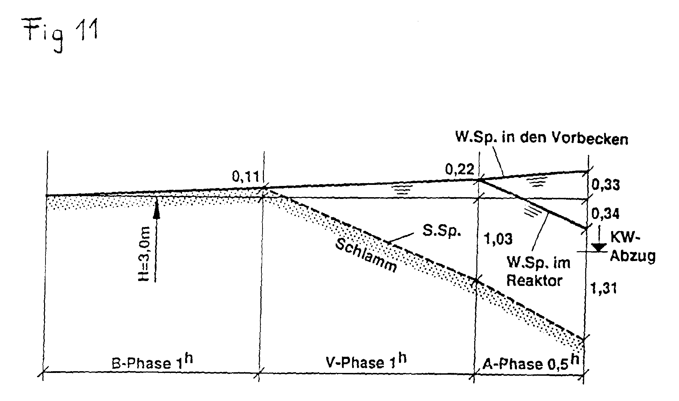

### Hydraulische Bemessung: (max. Zufluß) gem. Fig. 11

B-Phase = 1 ^{h}; V-Phase = 1 ^{h};
A-Phase; (2^{h} + x^{h}) x 2,25 = 11 x X; X ≅ O,5 ^{h}
Vₛ = Sinkgeschwindigkeit des Schlammspiegels

### Biochemische Berechnung: (mittlere Belüftungszeit = 2,4 h)

Erf. aerobes Schlammalter: 10 Tage (Nitrifikation)
Belastung des biologischen Reaktors: 6,0 kg BSB5/d
Schlammproduktion: 1,0 kg TS/kg BSB5
Belüftungsfaktor des Reaktors: = 2,4 ^{h} : (2,4 ^{h} + 1,0 ^{h} + 0,4 ^{h}) = 0,63

Erforderliches Schlammalter SM_{erf} = 6,0 x 1,0 x 10 = 60 kg /TS;
Vorhandenes SchlammalterSMᵥₒᵣₕ = 30 x 3,3 x 0,63 = 62 kg TS > 60 kg TS

## Patentansprüche

1. Verfahren zur Reinigung von kommunalem oder ähnlichem Abwasser nach der Einbeckentechnologie, in der während eines Zyklus die Phasen Belüften (B-Phase), Vorabsetzen (V-Phase) und Abziehen von Klarwasser (A-Phase) ablaufen, dadurch gekennzeichnet, daß der biologische Reaktor (1) mit einem oder mehreren vorgeschalteten Absetz- bzw. Schlammspeicherbecken (2) zu hydraulisch kommunizierenden Gefäßen verbunden ist, daß der Zufluß zur Gesamtanlage kontinuierlich erfolgt, und daß in der Abzugsphase der Zufluß (3) zum biologischen Reaktor unterbunden wird.

2. Verfahren nach Anspruch 1, dadurch gekennzeichnet, daß der Zufluß (3) zum biologischen Reaktor (1) in der V-Phase und A-Phase unterbunden wird.

3. Verfahren nach Anspruch 1 oder 2, dadurch gekennzeichnet, daß die Belüftung (7) nach Erreichen eines vorgegebenen Wasserspiegels im biologischen Reaktor (1) noch vor Erreichen des vorgegebenen Zeitintervalls abgestellt und die V-Phase beginnt.

4. Verfahren nach einem der Ansprüche 1 bis 3, dadurch gekennzeichnet, daß nach Erreichen eines vorgegebenen minimalen Wasserspiegels im biologischen Reaktor (1) die A-Phase abgebrochen wird und ein neuer Zyklus beginnt.

5. Verfahren nach einem der Ansprüche 1 bis 4, dadurch gekennzeichnet, daß zwischen der V- und A-Phase kurzzeitig (ca. 1 bis 2 Minuten) ca. 1,2 m unter dem Wasserspiegel Überschußschlamm (ÜS) aus dem biologischen Reaktor abgezogen, einem Speicherbecken zugeführt und das Trübwasser wieder in den biologischen Reaktor (1) rückgeführt wird.

6. Verfahren nach einem der Ansprüche 1 bis 5, dadurch gekennzeichnet, daß nach Abschluß der A-Phase und noch vor der anschließenden Belüftung kurzzeitig (ca. 1 bis 2 Minuten) Schwimmschlamm (SS) abgezogen, einem Speicherbecken zugeführt und das Trübwasser wieder in den biologischen Reaktor (1) rückgeführt wird.

7. Einrichtung zur Durchführung der Ansprüche 1 bis 6, dadurch gekennzeichnet, daß für den Klarwasserabzug in der A-Phase ein fix montierter Druckluftheber (6) gemäß Fig. 6 eingesetzt wird, der gleichzeitig der Notentlastung dient.

8. Einrichtung nach einem der Ansprüche 1 bis 7, dadurch gekennzeichnet, daß für den Überschußschlammabzug ein Druckluftheber (4) gemäß Fig. 7 eingesetzt wird.

9. Einrichtung nach einem der Ansprüche 1 bis 8, dadurch gekennzeichnet, daß für den Schwimmschlammabzug ein Druckluftheber (5) gemäß Fig. 8 eingesetzt wird.

10. Einrichtung nach einem der Ansprüche 1 bis 9, dadurch gekennzeichnet, daß der Verschluß des in dem Bodenbereich des biologischen Reaktors (1) mündenden Zulaufes (3) während der A-Phase mit der Druckluft, die den Druckluftheber für den Klarwasserabzug betreibt, erfolgt und daß beispielsweise ein Gummiball oder Gummischlauch (8) gemäß Fig. 9 zum Einsatz kommt.

11. Einrichtung nach einem der Ansprüche 1 bis 10, dadurch gekennzeichnet, daß zur Belüftung (7) feinblasige Druckluft eingesetzt wird.

12. Einrichtung nach einem der Ansprüche 1 bis 11, dadurch gekennzeichnet, daß für den Betrieb der Belüfter, Druckluftheber und Verschlüsse nur ein Luftverdichter (Kompressor) eingesetzt und die Luftverteilung mit Magnetverschlüssen vorgenommen wird.

13. Einrichtung nach einem der Ansprüche 1 bis 12, dadurch gekennzeichnet, daß zur Steuerung der Prozesse eine Computer-Steuerung eingesetzt wird.

14. Einrichtung nach einem der Ansprüche 1 bis 13, dadurch gekennzeichnet, daß zum Erfassen der beiden Wasserspiegellagern im biologischen Reaktor (1) gemäß Anspruch 3 und 4 Schwimmerschalter eingesetzt werden.

15. Einrichtung nach einem der Ansprüche 1 bis 14, dadurch gekennzeichnet, daß zur Geruchsvermeidung die Abluft der Absetz- und Speicherbecken abgesaugt und zur Belüftung des biologischen Reaktors (1) verwendet wird.
